# EUROPÄISCHE PATENTSCHRIFT

(11) **EP 1 903 241 B1**
(45) Veröffentlichungstag und Bekanntmachung des Hinweises auf die Patenterteilung: **16.03.2011**
(21) Anmeldenummer: 07017156.6
(22) Anmeldetag: 01.09.2007
(51) Int. Cl.: F16D 55/00

(54) **Bremsträger**
Brake support
Support de frein

(30) Priorität: 20.09.2006 DE 102006044834
(43) Veröffentlichungstag der Anmeldung: 26.03.2008
(73) Patentinhaber: BPW Bergische Achsen KG, 51674 Wiehl (DE)
(72) Erfinder: Borlinghaus, Thomas, 51647 Gummersbach (DE); Oerter, Karsten, 51588 Nümbrecht (DE); Trapp, Karsten, 51674 Wiehl (DE)
(74) Vertreter: Christophersen & Partner

(56) Entgegenhaltungen:
- DE-A1-102006 002 569
- DE-U1- 20 021 587
- GB-A- 1 182 896

## Beschreibung

Die Erfindung betrifft einen Bremsträger zum Festlegen einer Bremssattelanordnung an einer Fahrzeugachse mit einer Bremssattelanbindung zur Festlegung des Bremssattels am Bremsträger, einer Achsaufnahme, über welche der Bremsträger an der Fahrzeugachse festlegbar ist, und einem die Bremssattelanbindung mit der Achsaufnahme verbindenden Bereich, wobei der Verbindungsbereich zwei Stege aufweist, deren Querschnittsschwerpunkte zumindest bereichsweise auf verschiedenen Seiten einer durch die Bremssattelanbindung und die Achsaufnahme verlaufenden Mittelebene liegen.

Derartige Bremsträger dienen zur Festlegung der Bremssattelanordnungen von Scheibenbremsen, beispielsweise vom Gleitsattel- oder Festsatteltyp, und sind zur Übertragung der beim Bremsen auf die Bremssattelanordnung einwirkenden Bremskräfte zwischen der Fahrzeugachse und der Bremssattelanordnung angeordnet. Häufig werden zwei Bremsträger auf gegenüberliegenden Seiten der Fahrzeugachse befestigt, die dann gemeinsam eine Bremssattelanordnung halten. Die während des Bremsbetriebs auftretenden Bremskräfte werden ausgehend von der Bremssattelanordnung über die Bremsträger in die Fahrzeugachse eingeleitet. Aufgrund der beim Bremsen teilweise erheblichen Bremskräfte sind Bremsträger als massive Bauteile ausgebildet.

Ein Bremsträger mit den im Oberbegriff angegebenen Merkmalen ist aus der GB 1 182 896 A bekannt. Der Verbindungsbereich des Bremsträgers ist, in Umfangsrichtung gesehen, auf insgesamt drei Segmente aufgeteilt, wobei diese in Achsrichtung unterschiedliche Längspositionen aufweisen. Die beiden äußeren Verbindungsbereiche bzw. Segmente lassen eine Verkröpfung erkennen, mittels der sich ein größerer Kontaktbereich zu der einwärts angeordneten Fahrzeugachse erzielen lässt.

Aus der DE 200 21 587 U1 ist eine Bremseinrichtung mit zweiteiligem Bremsträger bekannt. Achsseitig weist der Bremsträger eine die Fahrzeugachse teilweise umgreifende Öffnung auf, entlang welcher der Bremsträger mit der Achse verschweißt ist. Weiter außen am Bremsträger sind Öffnungen vorgesehen, durch welche die Befestigungsmittel zur Anbindung des Bremssattels an dem Bremsträger hindurchgeführt werden.

Derartige Bremsträger haben sich in der Vergangenheit zwar durchaus bewährt, jedoch weisen sie vor allem bei Bremsen mit größeren Scheibendurchmessern ein vergleichsweise großes Gewicht auf, da bei solchen Bremsen der Abstand zwischen einerseits der Bremssattelanbindung und andererseits der Achsaufnahme vergleichsweise groß ist. Zur Überbrückung dieses Abstands ist einen langer Verbindungsbereich erforderlich, dessen massive Bauweise ebenfalls zum Gewicht des Bremsträgers beiträgt.

Aufgabe der vorliegenden Erfindung ist es, einen Bremsträger bereitzustellen, der sich durch ein geringes Gewicht bei gleichzeitig zuverlässiger Übertragung der Bremskräfte auszeichnet.

Diese Aufgabe wird bei einem Bremsträger der eingangs genannte Art erfindungsgemäß dadurch gelöst, dass die Querschnittsschwerpunkte der streben gegenüber der Mittelebene zumindest bereichsweise gegensinnig geneigt verlaufen.

Es hat sich gezeigt, dass die Kraftübertragung von der Bremssattelanordnung hin zur Achsaufnahme bei massiver Plattenbauweise des Bremsträgers nicht gleichmäßig über den gesamten Verbindungsbereich erfolgt. Vielmehr wird ein wesentlicher Teil der Bremskraft in den Randbereichen des Verbindungsbereichs übertragen, in denen jeweils eine Strebe vorgesehen und an den dortigen Kraftfluss angepasst ist. In Bereichen mit nur geringem Anteil an der Kraftübertragung ist hingegen kein oder wenig Material vorhanden, wodurch sich eine insgesamt leichtgewichtige Bauweise ergibt. Zudem sind die streben schwerpunktmäßig zumindest bereichsweise außerhalb der Mittelebene nur dort vorgesehen, wo die Übertragung der Bremskräfte erfolgt, was gleichfalls eine Reduzierung des Bremsträgergewichts zur Folge hat. Erreicht wird somit eine zuverlässige Kraftübertragung bei einem gleichzeitig geringen Bremsträgergewicht.

In für die Ableitung der Kräfte vorteilhafter Ausgestaltung wird vorgeschlagen, dass sich der Querschnitt der beiden Stege über deren Länge ändert.

Als vorteilhaft hat sich ferner eine Ausgestaltung erwiesen, bei der sich der Querschnitt der streben von der Achsaufnahme in Richtung der Bremsanbindung zumindest bereichsweise erweitert, um eine zuverlässige Einleitung der Bremskräfte von der Bremssattelanbindung in die bremssattelseitigen Enden der Stege zu erreichen.

Für ein geringes Gewicht des Bremsträgers ist es ferner von Vorteil, wenn die streben ihren achsseitigen Enden schmaler sind, als die Bremssattelanbindung, da die Einleitung der Bremskräfte nicht über die gesamte Breite der Bremssattelanbindung, sondern nur über einen Teilbereich erfolgt.

In diesem Zusammenhang ist es weiter von Vorteil, wenn das Ende der einen Strebe im Bereich der Rückseite und das Ende der anderen Strebe im Bereich der Vorderseite der Achsaufnahme mit dieser verbunden sind, wodurch sich eine die versetzt zur Mittelebene angreifenden Kräfte zuverlässig übertragende und gleichzeitig leichtgewichtige Bauweise ergibt.

Einem geringen Gesamtgewicht des Bremsträgers ist es ferner zuträglich, wenn zwischen den beiden Streben eine Öffnung vorgesehen ist. Zwar ist es im Prinzip auch möglich, zwischen den Streben eine schmale Materialbrücke vorzusehen, das Vorhandensein einer Öffnung spart jedoch Gewicht.

Darüber hinaus ist es von gewichtsmäßigem Vorteil, wenn die Bremssattelanbindung zwei materialverbundene Hülsen zur Durchführung von Befestigungsmitteln aufweist.

Die Achsaufnahme weist in vorteilhafter Ausgestaltung einen Aufnahmering auf, der die Mantelfläche der Fahrzeugachse auf deren Umfang umschließt oder zumindest umgreift, und so eine zuverlässige, flächige Übertragung der Bremskraft in die Fahrzeugachse gewährleistet. Der Aufnahmering kann beispielsweise mit dem Achsrohr der Fahrzeugachse oder einem an der Fahrzeugachse vorgesehenen Achsstummel verschweißt werden.

Aber auch ein am Achsstummel einstückig angeformter Bremsträger ist möglich.

Schließlich hat es sich als vorteilhaft erwiesen, wenn eine der Streben mit Mitteln zum Festlegen von Anbauteilen versehen ist, wodurch sich der Montageaufwand bei der Bremsmontage verringert.

Weitere Vorteile und Einzelheiten der Erfindung werden nachfolgend unter Bezugnahme auf die beigefügten Zeichnungen erläutert. Darin zeigen
- Figur 1: eine perspektivische Darstellung einer Bremsanordnung mit einem aus dem Stand der Technik bekannten Bremsträger;
- Figur 2: einen erfindungsgemäßen Bremsträger in perspektivischer Darstellung von dessen Vorderseite her betrachtet;
- Figur 3: den Bremsträger aus Figur 2 in einer perspektivischen Darstellung von dessen Rückseite her betrachtet;
- Figur 4: eine Ansicht der Vorderseite des Bremsträgers;
- Figur 5: eine Stirnansicht des Bremsträgers aus der in Figur 4 mit V bezeichneten Richtung;
- Figur 6: eine Ansicht der Rückseite des Bremsträgers;
- Figur 7: eine Stirnansicht des Bremsträgers aus der in Figur 6 mit VII bezeichneten Richtung;
- Figur 8: eine Schnittdarstellung gemäß der in Figur 4 mit VIII bezeichneten Schnittebene und
- Figur 9: eine Schnittdarstellung gemäß der in Figur 6 mit IX bezeichneten Schnittebene

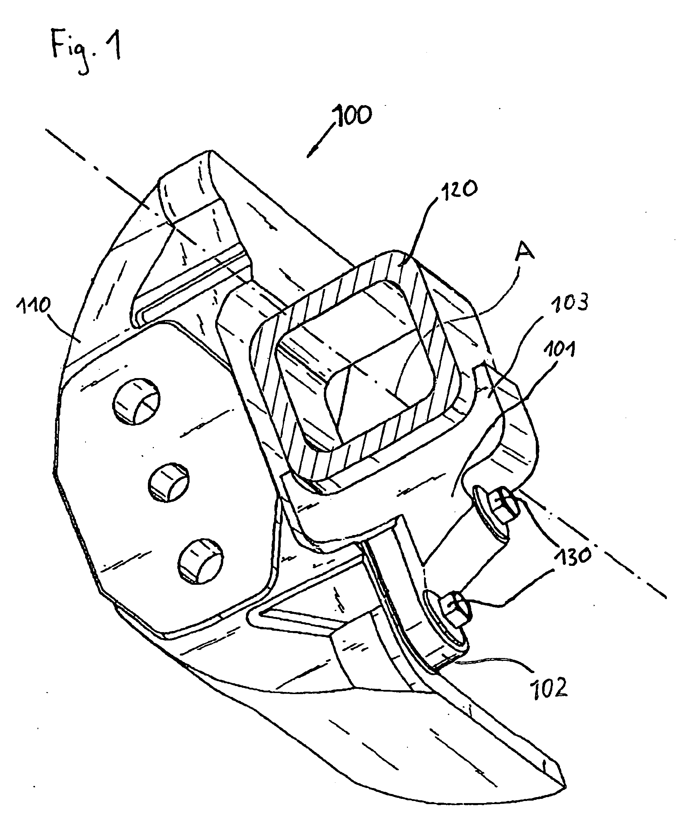

In Figur 1 dargestellt ist als Stand der Technik eine Bremseinrichtung 100 mit einem Bremssattel 110 und einem von zwei Bremsträgern 101. Innerhalb des Bremssattels sind in bekannter Weise Bremsbeläge angeordnet, die beim Bremsen mit einer rotierenden Bremsscheibe in Anlage gelangen. Die dabei am Bremssattel 110 angreifenden Bremskräfte werden über den Bremsträger 101 in die Fahrzeugachse abgeleitet.

Jeder der beiden Bremsträger 101, von denen nur einer dargestellt ist, ist als massive Stahlplatte ausgebildet, die achsseitig mit einer U-förmigen Aufnahme versehen ist, die eine im Wesentlichen quadratische Fahrzeugachse 120 mit Achsmittellinie A mantelseitig umgreift und durch Schweißen an die Achse 120 angebunden ist. Oberhalb der insgesamt gabelförmigen Achsaufnahme 103 ist die Bremssattelanbindung 102 zu erkennen, an welcher der Bremssattel 110 durch Verschrauben mit dem Bremsträger 101 verbunden ist. Hierzu sind zwei Befestigungsschrauben 130 längs zum Material des plattenförmigen Bremsträgers 101 in einer in etwa tangential zur Fahrzeugachse 120 verlaufenden Richtung durch diesen hindurchgeführt und mit dem Bremssattel 110 verschraubt.

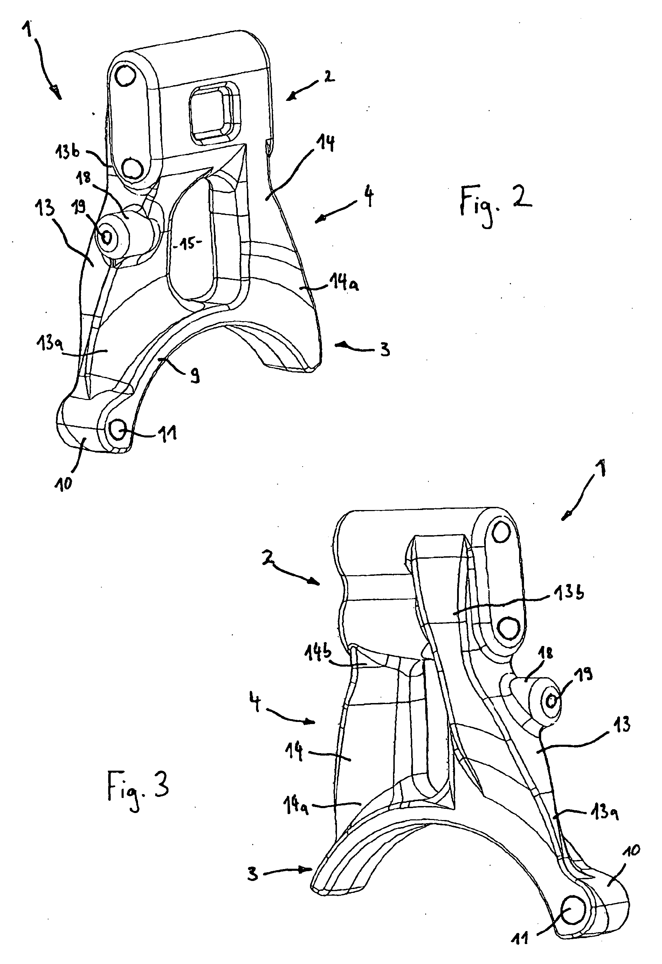

Eine derart massive, plattenförmige Gestalt des Bremsträgers hat sich insbesondere bei Bremseinrichtungen mit großem Bremsscheibendurchmesser als nachteilig erwiesen, da sich mit Zunahme des Bremsscheibendurchmessers der Abstand der Bremssattelanbindung zu der Achsaufnahme erhöht. Bei solchen Bremseinrichtungen ist es erforderlich, zwischen der Bremssattelbefestigung und der Achsaufnahme einen langen Verbindungsbereich vorzusehen, was eine Gewichtszunahme im Bereich der ungefederten Massen des Fahrzeugs zur Folge hat. Der in den Figuren 2 bis 9 anhand eines Ausführungsbeispiels beispielhaft dargestellte Bremsträger zeichnet sich demgegenüber bei gleichermaßen zuverlässiger Ableitung der Bremskräfte vor allem durch ein geringeres Gewicht aus, was im Wesentlichen dadurch erreicht wird, dass auf die bei einem plattenförmigen Verbindungsbereich nicht oder nur unwesentlich im Kraftfluss liegenden Bereiche verzichtet wird.

Einzelheiten des erfindungsgemäßen Bremsträgers lassen sich den perspektivischen Darstellungen in den Figuren 2 und 3 entnehmen, in denen Figur 2 eine Ansicht auf die Fahrzeugaußenseite, d.h. die Vorderseite, und Figur 3 eine entsprechende Ansicht der Rückseite zeigt.

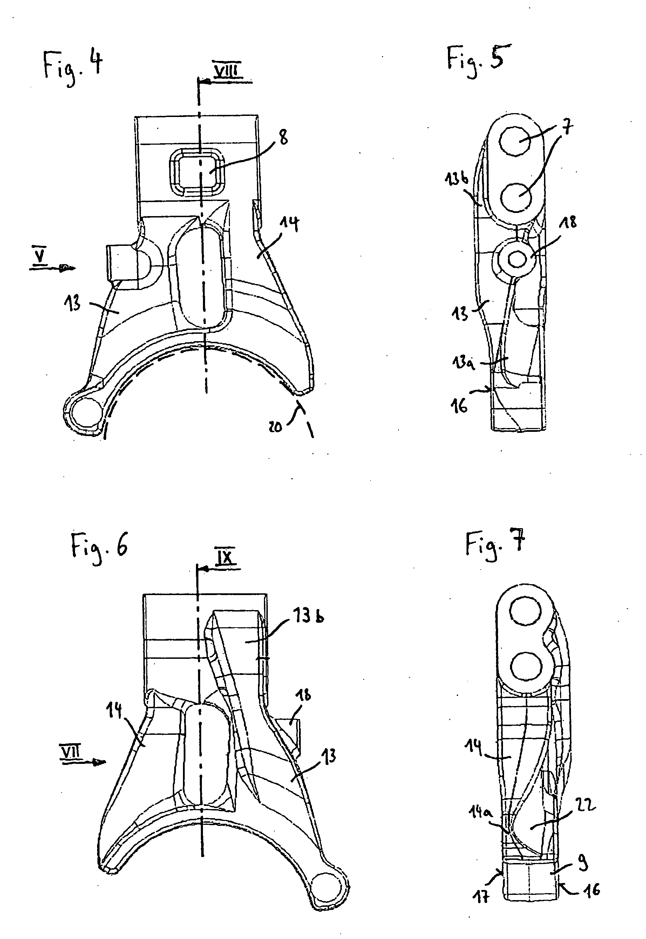

Der Bremsträger 1 weist an seinem der Fahrzeugachse abgewandten Ende eine Bremsanbindung 2 auf, über die die Bremssattelanordnung der Fahrzeugbremse in einer Position radial oberhalb der Achse gehalten wird. Achsseitig ist eine Achsaufnahme 3 vorgesehen, die den Mantel der Fahrzeugachse 20 bereichsweise umschließt (vgl. auch Figur 4). Die Achsaufnahme 3 ist mit der Bremssattelanbindung 2 über einen Verbindungsbereich 4 einstückig verbunden. Die Erfindung beschränkt sich jedoch nicht auf z.B. in Gusstechnik hergestellte, einstückige Bremsträger 1, sondern ist ebenso bei aus mehreren Teilen gefertigten Bremsträgern 1, bei denen beispielsweise die Bremssattelanbindung 2, die Achsaufnahme 3 und der Verbindungsbereich 4 jeweils z.B. durch Schweißen miteinander verbunden sind, anwendbar. Auch ist die Erfindung nicht auf rohrförmige Fahrzeugachsen beschränkt. Der erfindungsgemäße Bremsträger kann gleichermaßen auch bei z.B. im Querschnitt quadratischen bzw. ringquadratischen Fahrzeugachsen eingesetzt werden.

Der perspektivischen Darstellung in Figur 2 lässt sich entnehmen, dass der Verbindungsbereich 4 zwei verschieden gestaltete Streben 13, 14 aufweist, zwischen denen eine durchgehende Öffnung 15 vorgesehen ist.

Die eine Strebe 13 ist im Bereich ihres unteren Endes 13 a, also ihres Fußbereiches, mit dem als Ringsegment gestalteten Aufnahmering 9 der Achsaufnahme 3 einstückig verbunden. In diesem Fußbereich 13 a ist die Strebe 13 deutlich schmaler ausgeführt, als der Aufnahmering 9. Nach oben hin in Richtung der Bremssattelanbindung 2 erweitert sich der Querschnitt der Strebe 13. Am oberen Ende 13 b umfaßt die Strebe 13 die Bremssattelanbindung 2 von unten und von der Seite her, so dass die Bremskräfte gleichmäßig in die Strebe 13 eingeleitet werden. An der Strebe 13 einstückig vorgesehen ist ein Ansatz 18 mit einer Öffnung 19, beispielsweise einem Gewindesackloch, über welches sich Anbauteile der Fahrzeugbremse montieren lassen, etwa Schmutz- oder Hitzeschutzbleche. Ebenso weist auch der Aufnahmering 9 einen einstückig angeformten Ansatz 10 mit einer Öffnung 11 zum Festlegen von Anbauteilen, etwa Bremssensoren, auf.

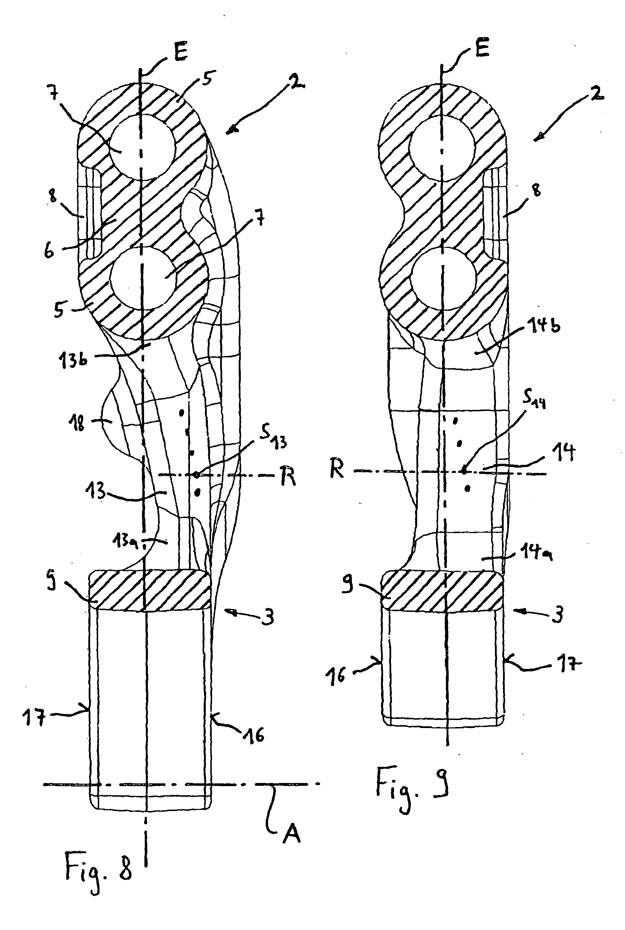

Während das untere Ende 13 a der Strebe 13 im Bereich der Rückseite 16 (vgl. auch Figur 8) des Bremsträgers 1 angeordnet ist, ist das achsseitige Ende 14 a der Strebe 14, also deren Fußbereich, an der gegenüberliegenden Seite 17 der Achsaufnahme 3 angeordnet (vgl. Figur 7). Das achsseitige Ende 14 a der Strebe 14 weist einen Abstand zur Rückseite 16 des Bremsträgers 1 auf. Das bremssattelseitige Ende 14 b der Strebe 14 ist von unten her an der Bremssattelanbindung 2 angeformt.

Einzelheiten der Streben 13 und 14 lassen sich am besten den Darstellungen der Figuren 5 und 8 bzw. 7 und 9 entnehmen, die jeweils sich gegenüberliegende Seiten der Streben 13 bzw. 14 zeigen. Im Folgenden werden die jeweiligen Ansichten entsprechend der Darstellung in Figur 4 mit "links" bzw. "rechts" bezeichnet.

In Figur 5 ist eine Ansicht der linken Seite der Strebe 13 dargestellt. Die Breite des unteren Endes 13a der Stütze 13 beträgt in etwa 30% der Breite des Aufnahmerings 9. Rückseitig ist das untere Ende 13a in etwa bündig mit der Rückseite 16 des Aufnahmerings 9, wohingegen die Vorderseite des Endes 13a über eine Rundung einstückig in den Aufnahmering 9 übergeht. In Richtung der Bremssattelanbindung 2 vergrößert sich der Querschnitt der Strebe 13, die an ihrem oberen Ende mit der Unterseite der Bremssattelanbindung 2 und der Rückseite 16 der Bremssattelanbindung 2 flächig in diese übergeht (vgl. auch Figur 6). Die rechte Seite der Strebe 13 ist in Fig. 8 zu erkennen.

In Figur 7 ist die Strebe 14 von der rechten Seite her dargestellt. Auch bei dieser ist das untere Ende 14a schmaler gestaltet als der Aufnahmering 9. In Richtung der Rückseite 16 weist die Strebe 14 eine abgerundete Ausnehmung 22 auf, die sich nicht durchgehend über ihre gesamte Tiefe erstreckt, so dass die Ausnehmung in der in Figur 9 dargestellten Ansicht der linken Seite der Strebe 14 nicht zu erkennen ist. Die Größe der Ausnehmung 22 nimmt nach oben in Richtung der Bremssattelaufnahme 2 ab, so dass sich der Querschnitt der Strebe 14 in dieser Richtung erweitert. Die Strebe 14 ist in etwa bündig mit der Vorderseite 17 des Bremsträgers 1 auf dem Aufnahmering 9 angeordnet.

In den Figuren 8 und 9 sind die Streben 13 und 14 jeweils in einer Ansicht aus dem Inneren der Öffnung 15 gegenübergestellt, wobei sich die Querschnittsänderung bzw. -erweiterung der Strebe 13 nach oben hin gut zu erkennen ist. Bei der Strebe 14 wird die Querschnittsänderung bei Hinzudenken der in Figur 9 verdeckten Ausnehmung 22 (vgl. Figur 7) deutlicher.

Beispielhaft ist für jeweils einen Querschnitt der Material- bzw. Querschnittsschwerpunkt mit S₁₃ bzw. S₁₄ bezeichnet. Als Querschnitte werden hier an der Achsmittellinie A parallele Querschnitte R definiert, in denen dann die jeweiligen Querschnittsschwerpunkte liegen. Zu erkennen ist, dass sich der Querschnittsschwerpunkt S₁₃ auf der einen Seite und der Querschnittsschwerpunkt S₁₄ auf der gegenüberliegenden Seite der Mittelebene E befinden, die sich radial und mittig von der Achsaufnahme 3 in Richtung der Bremssattelanbindung 2 erstreckt. Die Geometrie der Streben 13, 14 bzw. die Änderung der Strebenquerschnitte über die Länge der Streben 13, 14 ist dabei so gewählt, dass sich bei Betrachtung von übereinanderliegenden Querschnitten ein gegensinnig geneigter Verlauf der Material- bzw. Querschnittsschwerpunkte S₁₃ bzw. S₁₄ ergibt, wie dieser durch die Folge von Punkten schematisch angedeutet ist. Durch diesen gegensinnig diagonalen Schwerpunktverlauf wird eine gute Ableitung der Bremskräfte bei gleichzeitig geringem Gewicht des Verbindungsbereichs 4 erreicht. Würde man beispielsweise die in Figur 9 dargestellte Strebe 14 zu einer plattenförmigen Strebe vergrößern, wodurch sich der Schwerpunktverlauf parallel zur Mittelebene E ausrichten würde, so trügen die zusätzlichen Volumenanteile zur Übertragung der Bremskräfte nicht nennenswert bei, wohl aber zur Erhöhung des Gesamtgewichts des Bremsträgers 1.

Durch die erfindungsgemäße Ausgestaltung des Verbindungsbereichs 4 mit den vorbeschriebenen Streben 13, 14 wird eine den statischen und dynamischen Kräften angepasste Verbindung erreicht, bei der nahezu sämtliche Volumenanteile der Streben 13, 14 zur Kraftübertragung beitragen. Durch den Verzicht auf Volumenanteile ohne Kraftübertragungsfunktion wird das Gewicht des Bremsträgers 1 insgesamt gering gehalten.

Auch die Ausgestaltung der Bremssattelanbindung 2 ist der Leichtbauweise des Bremsträgers 1 zuträglich. Die Bremssattelanbindung 2 besteht aus zwei über einen Übergangsbereich 6 miteinander materialverbundenen Hülsen 5 zur Durchführung von in den Figuren nicht dargestellten Befestigungsmitteln, beispielsweise Schraubbolzen. Diese können von der einen Seite her durch die Öffnungen 7 der Hülsen 5 in einer quer bzw. tangential zur Fahrzeugachse 20 verlaufenden Richtung hindurchgeführt und mit der Bremssattelanordnung verschraubt werden. Wiederum zur Gewichtseinsparung weist die Bremssattelanbindung 2 vorderseitig eine im Wesentlichen kubische Ausnehmung 8 auf. An der gegenüberliegenden Seite ist eine in etwa halbzylindrische Ausnehmung vorgesehen, in die das sattelseitige Ende 13 b der Strebe 13 teilweise hineinragt, vgl. Figur 6.

Aus dem Stand der Technik sind auch Bremsträger mit zu der Achse A parallel liegenden Hülsen 5 bekannt. Die Erfindung ist auch bei Konstruktionen wie z. B. der in der DE 10 2006 002569 A1 beschriebenen anwendbar, die nur einen, entsprechend breiteren Bremsträger verwenden. In diesem Fall kann z.B. auch ein Bremsbelag und/oder der der schwimmenden Führung des Bremssattels dienende Loslagerbolzen und Festlagerbolzen direkt vom Bremsträger aufgenommen werden.

Mit dem erfindungsgemäßen Bremsträger wird durch Verzicht auf nicht der Kraftübertragung dienende Volumenteile des Verbindungsbereichs eine gegenüber Bremsträgern mit plattenförmig massiven Verbindungsbereichen deutliche Gewichtseinsparung von bis zu 30 % erreicht, ohne hierbei die Zuverlässigkeit der Krafteinleitung in die Fahrzeugachse zu beeinträchtigen.

### Bezugszeichenliste

- 1: Bremsträger
- 2: Bremssattelanbindung
- 3: Achsaufnahme
- 4: Verbindungsbereich
- 5: Hülse
- 6: Übergangsbereich
- 7: Öffnung
- 8: Ausnehmung
- 9: Aufnahmering
- 10: Ansatz
- 11: Öffnung
- 12: Anlagefläche
- 13: Strebe
- 13a,b: Enden
- 14: Strebe
- 14a,b: Enden
- 15: Öffnung
- 16: Rückseite
- 17: Vorderseite
- 18: Ansatz
- 19: Montageöffnung
- 20: Fahrzeugachse
- 21: Ausnehmung
- 22: Ausnehmung

- 100: Bremssattelanordnung
- 101: Bremsträger
- 102: Bremssattelaufnahme
- 103: Achsaufnahme
- 104: Verbindungsbereich
- 110: Bremssattel
- 120: Achse
- 130: Befestigungsbereich

- A: Achsmittellinie
- E: Mittelebene
- R: Querschnitt
- S₁₃: Materialschwerpunkt
- S₁₄: Materialschwerpunkt

## Patentansprüche

1. Bremsträger zum Festlegen einer Bremssattelanordnung an einer Fahrzeugachse (20) mit einer Bremssattetanbindung (2) zur Festlegung des Bremssattels am Bremsträger (1), einer Achsaufnahme (3), über welche der Bremsträger (1) an der Fahrzeugachse (20) festlegbar ist, und einem die Bremssattelanbindung (2) mit der Achsaufnahme (3) verbindenden Bereich (4), wobei der Verbindungsbereich (4) zwei streben (13, 14) aufweist, deren Querschnittsschwerpunkte (S₁₃, S₁₄) zumindest bereichsweise auf verschiedenen Seiten einer durch die Bremssattelanbindung (2) und die Achsaufnahme (3) verlaufenden Mittelebene (E) liegen,
**dadurch gekennzeichnet,**
**dass** die Querschnittsschwerpunkte (S₁₃, S₁₄) der streben (13, 14) gegenüber der Mittelebene (E) zumindest bereichsweise gegensinnig geneigt verlaufen.

2. Bremsträger nach Anspruch 1, **dadurch gekennzeichnet, dass** sich der Querschnitt (R) der beiden streben (13, 14) über deren Länge ändert.

3. Bremsträger nach Anspruch 2, **dadurch gekennzeichnet, dass** sich der Querschnitt (R) der streben (13, 14) von der Achsaufnahme (3) in Richtung der Bremssattelanbindung (2) zumindest bereichsweise erweitert.

4. Bremsträger nach einem der vorhergehenden Ansprüche, **dadurch gekennzeichnet, dass** die streben (13, 14) an ihren achsseitigen Enden (13a, 14a) schmaler sind, als die Bremssattelanbindung (2).

5. Bremsträger nach Anspruch 4. **dadurch gekennzeichnet, dass** das Ende (13a) der einen strebe (13) im Bereich der Rückseite (16) und das Ende (14a) der anderen strebe (14) im Bereich der Vorderseite (17) der Achsaufnahme (3) mit dieser verbunden ist.

6. Bremsträger nach einem der vorhergehenden Ansprüche, **dadurch gekennzeichnet, dass** zwischen den beiden streben (13, 14) eine Öffnung (15) vorgesehen ist.

7. Bremsträger nach Anspruch 1, **dadurch gekennzeichnet, dass** die Bremssattelanbindung (2) zwei materialverbundene Hülsen (5) zur Durchführung von Befestigungsmitteln aufweist.

8. Bremsträger nach Anspruch 1, **dadurch gekennzeichnet, dass** die Achsaufnahme (3) einen Aufnahmering (9) aufweist, der einen Mantelbereich der Fahrzeugachse (20) umfangsseitig umfasst oder umschließt.

9. Bremsträger nach einem der vorhergehenden Ansprüche, **dadurch gekennzeichnet, dass** eine der streben (13) mit Mitteln (18, 19) zum Festlegen von Anbauteilen versehen ist_{.}

## Claims

1. A brake support plate for fixing a brake calliper arrangement on a vehicle axle (20) with a brake calliper connection (2) for fixing the brake calliper to the brake support plate (1), an axle-retaining means (3) by way of which the brake support plate (1) is capable of being fixed to the vehicle axle (20), and an area (4) connecting the brake calliper connection (2) to the axle-retaining means (3), wherein the connecting area (4) has two braces (13, 14), the cross-sectional centres of gravity (S₁₃, S₁₄) of which are situated at least locally on different sides of a centre plane (E) extending through the brake calliper connection (2) and the axle-retaining means (3), **characterized in that** the cross-sectional centres of gravity (S₁₃, S₁₄) of the braces (13, 14) extend inclined in opposite directions with respect to the centre plane (E) at least locally.

2. A brake support plate according to claim 1, **characterized in that** the cross-section (R) of the two braces (13, 14) varies over the length thereof.

3. A brake support plate according to claim 2, **characterized in that** the cross-section (R) of the braces (13, 14) increases at least locally from the axle-retaining means (3) in the direction of the brake calliper connection (2).

4. A brake support plate according to any one of the preceding claims, **characterized in that** the braces (13, 14) are narrower at the ends (13a, 14a) thereof towards the axle than the brake calliper connection (2).

5. A brake support plate according to claim 4, **characterized in that** the end (13a) of one brace (13) is connected to the axle-retaining means (3) in the region of the rear side (16) thereof and the end (14a) of the other brace (14) is connected to the axle-retaining means (3) in the region of the front side (17) thereof.

6. A brake support plate according to any one of the preceding claims, **characterized in that** an opening (15) is provided between the two braces (13, 14).

7. A brake support plate according to claim 1, **characterized in that** the brake calliper connection (2) has two integrally attached sleeves (5) for the guidance of fastening means.

8. A brake support plate according to claim 1, **characterized in that** the axle-retaining means (3) has a retaining ring (9) which embraces or encloses a surface region of the vehicle axle (20) on the periphery.

9. A brake support plate according to any one of the preceding claims, **characterized in that** one of the braces (13) is provided with means (18, 19) for fixing attachment parts.

## Revendications

1. Support de frein pour fixer un système d'étrier de frein sur un essieu de véhicule (20), comportant une attache (2) pour la fixation de l'étrier de frein sur le support de frein (1), un logement d'essieu (3) par lequel le support de frein (1) peut être fixé sur l'essieu de véhicule (20), et une zone (4) par laquelle l'attache (2) pour l'étrier de frein est reliée au logement d'essieu (3), la zone de liaison (4) comportant deux entretoises (13, 14), dont les centres de gravité (S₁₃, S₁₄) des sections sont situés au moins par zones sur deux côtés différents d'un plan médian (E) passant à travers l'attache (2) pour l'étrier de frein et le logement d'essieu (3),
**caractérisé en ce que** les centres de gravité (S₁₃, S₁₄) des sections des entretoises (13, 14) s'étendent, au moins par zones, de manière inclinée en sens opposé par rapport au plan médian (E).

2. Support de frein selon la revendication 1, **caractérisé en ce que** la section (R) des deux entretoises (13, 14) varie sur la longueur de celles-ci.

3. Support de frein selon la revendication 2 **caractérisé en ce que** la section (R) des entretoises (13, 14) s'élargit au moins par zones depuis le logement d'essieu (3) vers l'attache (2) pour l'étrier de frein.

4. Support de frein selon l'une quelconque des revendications précédentes, **caractérisé en ce que** les entretoises (13, 14) au niveau de leurs extrémités (13a, 14a) du côté essieu sont plus étroites que l'attache (2) pour l'étrier de frein.

5. Support de frein selon la revendication 4, **caractérisé en ce que** l'extrémité (13a) de l'une des entretoises (13) est reliée au logement d'essieu (3) dans la zone de la face arrière (16) de celui-ci et l'extrémité (14a) de l'autre entretoise (14) est reliée au logement d'essieu (3) dans la zone de la face avant (17) de celui-ci.

6. Support de frein selon l'une quelconque des revendications précédentes, **caractérisé en ce qu'**il est prévu une ouverture (15) entre les deux entretoises (13, 14).

7. Support de frein selon la revendication 1, **caractérisé en ce que** l'attache (2) pour l'étrier de frein comporte deux manchons (5) reliés à la matière pour le passage de moyens de fixation.

8. Support de frein selon la revendication 1, **caractérisé en ce que** le logement d'essieu (3) comporte une bague de réception (9) qui entoure ou enserre sur le pourtour une zone latérale de l'essieu de véhicule (20).

9. Support de frein selon l'une quelconque des revendications précédentes, **caractérisé en ce que** l'une des entretoises (13) est munie de moyens (18, 19) pour la fixation de pièces rapportées.
